# EUROPEAN PATENT APPLICATION

(11) **EP 1 659 520 A1**
(43) Date of publication of application: **24.05.2006**
(21) Application number: 04027527.3
(22) Date of filing: 19.11.2004
(51) Int. Cl.: G06Q 10/00

(54) **An agent-based architecture for manufacturing scheduling, related negotiation protocol and computer program product**

(71) Applicant: SIEMENS AKTIENGESELLSCHAFT, 80333 München (DE)
(72) Inventor: Gozzi, Andrea, 16155 Genova (IT); Paolucci, Massimo, Prof., 16148 Genova (IT)

(57) **Abstract**

An architecture of an agent-based scheduling system for scheduling processing of incoming work orders (40, WOA) in a plant by means of operations performed by physical entities (20) available in the plant, wherein the agents in the architecture comprise a tree-like hierarchy (S, A, C, U) including branches. The system is configured for applying a work order scheduling protocol to rule the interactions between the agents (10) in assigning operations requested by the incoming work orders to the physical entities (20). The protocol includes:
- a first main section, wherein the protocol identifies in the hierarchy a plurality of branches, each branch thus identified including physical entities adapted to process a given Work Order, and
- a second main section, wherein processing of the given Work Order is scheduled for each one of the identified branches of physical entities, whereby one of the scheduled branches is adapted to be selected for processing the given Work Order.

## Description

### Field of the invention

The present invention relates to scheduling techniques, such as e.g. techniques for scheduling manufacturing processes.

### Description of the related art

Industry Standard Architecture (ISA) 95 is a worldwide accepted standard guideline for modelling manufacturing systems. A detailed production scheduler is a fundamental component of a manufacturing execution system and the function provided by such a component is included in the ISA 95 standard. In this standard model both physical equipments and product descriptions are organized according to a hierarchical structure.

Computing a detailed schedule usually must take into account decisions, as resource assignment, relevant to different levels; additionally, it must satisfy constraints and meet objectives that are specific for each node in the model hierarchy. Changes may occur that locally modify such constraints and objectives.

A flexible scheduling system for use in manufacturing must be able to adapt to the distributed structure considered in the foregoing, while respecting the relationships among physical elements in the hierarchy. In a scheduling system compliant with the ISA 95 model the scheduling decisions must satisfy the local constraints, while reaching as much as possible the local objectives or finding an acceptable compromise among them.

As a consequence, a truly satisfactory scheduling system cannot be a comprehensive centralized component: as opposed thereto, it must be easily reconfigurable, also in terms of constraints and objectives, with the capability of mapping the possible changes in the physical manufacturing system (i.e., in the equipment and products).

A large number of scheduling systems have been presented both by commercial entities and in the scientific community. However, none of them appears to be based on a distributed agent architecture that is fully compliant with the ISA 95 model specifications.

Additionally, current production schedulers allow a definition of a given production plant only in terms of physical assets in order to model a scheduling process. However, such a modelling approach does not comply with the ISA 95 standard and does not allow a local definition of scheduling criteria and constraints within each ISA 95 physical entity (Site, Area, Cell, Unit).

### Object and summary of the invention

The object of the invention is thus to provide a solution that may meet the above-mentioned needs in a fully satisfactory manner.

According to the present invention, that object is achieved by means of a system architecture having the features set forth in the claims that follow. The invention also relates to a corresponding protocol, as well as a related computer program product, loadable in the memory of at least one computer and including software code portions for implementing the invention when the product is run on a computer. As used herein, reference to such a computer program product is intended to be equivalent to reference to a computer-readable medium containing instructions for controlling a computer system to coordinate the performance of the invention. Reference to "at least one computer" is evidently intended to highlight the possibility for the present invention to be implemented in a distributed/ modular fashion.

The claims are an integral part of the disclosure of the invention provided herein.

A preferred embodiment of the arrangement described herein provides that the steps described comprise a protocol whose purpose is to rule the interaction among the agents in an agent-based scheduler, whereby the protocol as a whole becomes an essential part of the agent-based scheduling system.

A particularly preferred embodiment of the invention is an architecture of an agent-based scheduling system for scheduling processing of incoming work orders in a plant by means of operations performed by physical entities available in the plant, wherein the agents in the architecture comprise a tree-like hierarchy including branches such as e.g. an ISA 95 architecture; the system is configured for applying a work order scheduling protocol to rule the interactions between the agents in assigning operations requested by the incoming work orders to the physical entities, the protocol including:
- a first main section, wherein the protocol identifies in the hierarchy a plurality of branches, each branch thus identified including physical entities adapted to process a given Work Order, and
- a second main section, wherein processing of the given Work Order is scheduled for each one of the identified branches of physical entities, whereby one of the scheduled branches is adapted to be selected for processing the given Work Order.

### Brief description of the annexed drawings

The invention will now be described, by way of example only, with reference to the enclosed figures of drawing, wherein:
- Figure 1 is a functional block diagram representative of a typical manufacturing execution system and its related scenario of use,
- Figure 2 is another block diagram showing a typical hardware layout supporting a manufacturing execution system,
- Figure 3 is representative of a tree structure in a plant definition,
- Figure 4 shows an example of agent classes in an arrangement as described herein,
- Figure 5 shows a Work Order - Product Segment relationship in an arrangement as described herein,
- Figure 6 shows example of Work Order Agents in an arrangement as described herein,
- Figure 7 shows Work Order Agents and Physical Entity interaction in an arrangement as described herein,
- Figure 8 shows a flowchart for a first section in a protocol as described herein,
- Figure 9 shows a flowchart for a second section in the protocol described herein,
- Figure 10 shows an example of hierarchical structure in an arrangement as described herein,
- Figure 11 shows an example useful to clarify the basic structure of the protocol by means of interactions among agents,
- Figure 12 shows an example of hierarchical system, and
- Figure 13 shows an example useful to clarify the basic structure of the protocol by means of interactions among agents.

### Detailed description of preferred embodiments of the inventtion

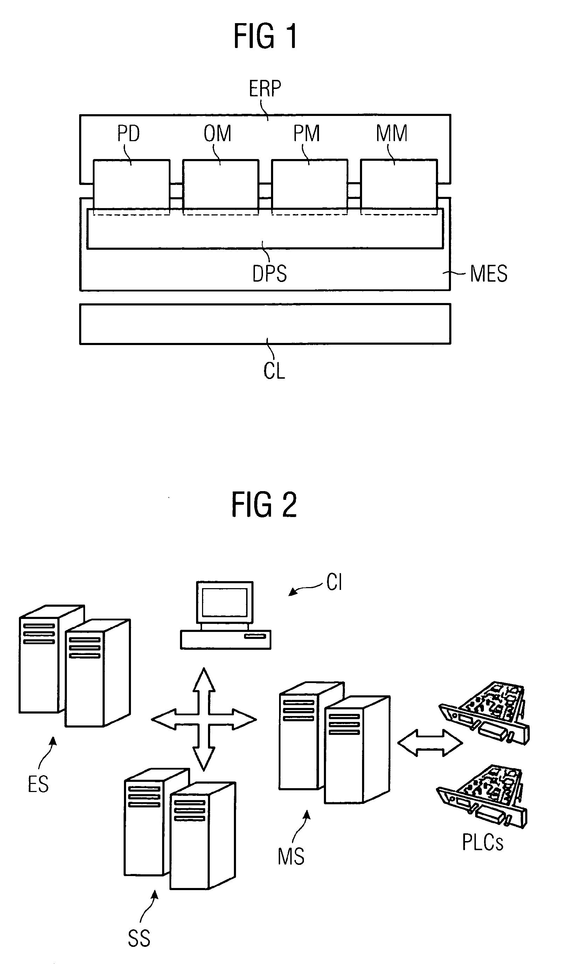

Figure 1 shows an exemplary functional architecture of plant planning and control system. In the architecture shown, the various equipment in the plant (e.g. an industrial plant such as a chemical plant or a plant for manufacturing mechanical, electrical, and/or electronic products) and the associated control devices are generally represented by a control level CL.

The control level CL is supervised by a manufacturing execution system or MES that includes a detailed production scheduler or DPS.

The scheduler receives input from an Enterprise Resource Planning entity or ERP via respective modules for product definition (PD), order management (OM), personnel management (PM), and material management (MM).

Figure 2 shows a possible hardware layout for the server and client PCs executing all the computing capabilities of the system including the Detailed Production Scheduler. The layout in question typically includes an ERP server ES, a MES server MS, a scheduler server SS. The MES server co-operates with control level hardware represented e.g. by control devices, such as PLCs, associated with the various equipment in the plant. Interfacing with the user is assured via a client interface CI comprised of e.g. one or more PCs for data input/output.

The exemplary embodiment of the invention described in the following refers, by way of example only, to a context wherein the need was felt of integrating an agent-based scheduler with a Siemens MES (Manufacturing Execution System) environment, such as the one commercially available under the designation SIMATIC IT^{TM}, and specifically with a visual tool, designated Production Modeler (PM), used to control plant operations by means of visual rules.

General information on the operating context referred to in the foregoing, the type of schedulers used therein, and the related support provided by the vendor (including software customization/upgrade) may be derived from G. Di Salvo, C. Johnson, and M. Pazzini: "A&D AS MES SIMATIC™ IT Production Suite v2", Relase 1, 2003, currently available with the applicant company.

The exemplary agent-based scheduling system described in the following is a Multi-Agent System (MAS) for scheduling essentially comprised of two parts:
- a static structure defining the classes of agents in the system, and
- a set of Multi-Agent System activities, defining the behaviors of the individual agents and the interaction protocols among agents (who makes decision, when, etc.).

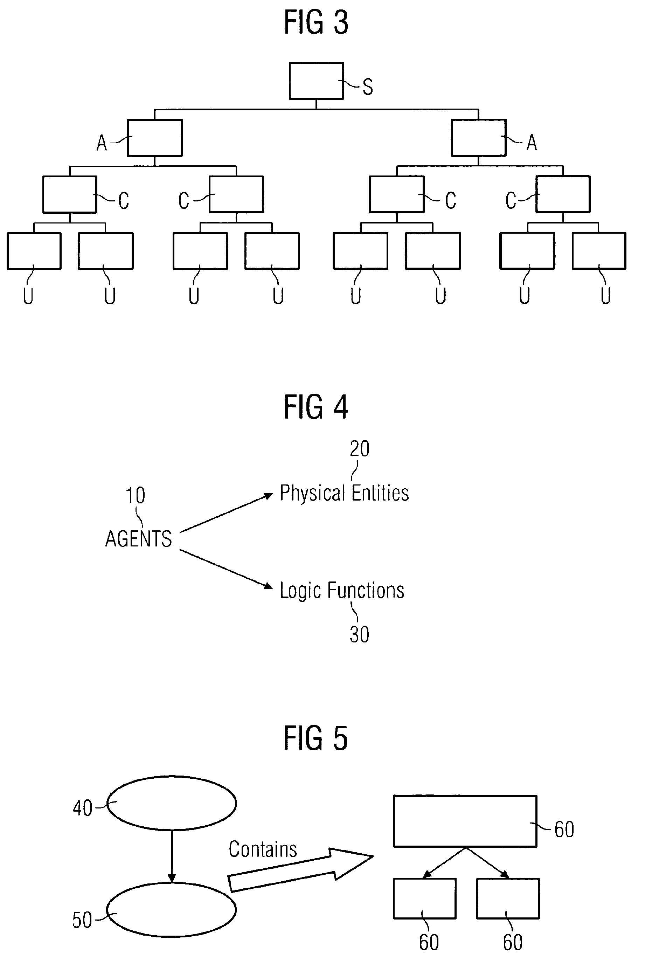

The exemplary arrangement described herein specifically relates to system architecture as shown in Figure 3, where the various agents are arranged in a tree-like architecture including branches.

The higher level in the hierarchy for a given enterprise include Site Agents S, and the branches departing therefrom extend down to Area Agents A, Cell Agents C, and Unit Agents U.

Such a tree-like hierarchy is at the basis e.g. of the ISA 95 standard plant definition.

As schematically shown in Figure 4, agents 10 are related to physical entities 20 and logical (or functional) entities 30. A physical entity 20, modelled by means of an agent, includes the physical entities of the ISA 95 standard plant definition (Enterprise, Site, Area, Cell and Unit).

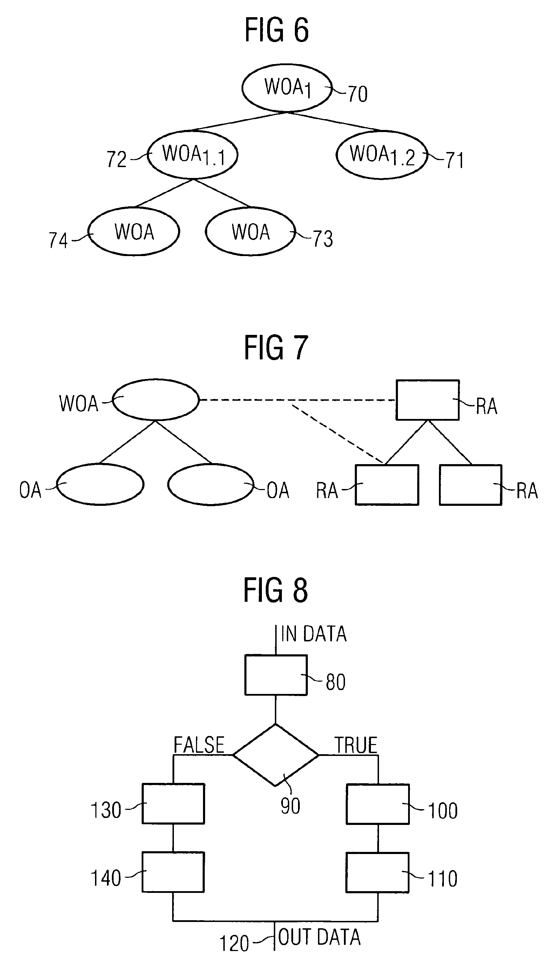

As schematically shown in Figure 5, a Production Schedule is essentially a list of Work Orders (WO) 40 to be scheduled with details. Each of these orders in turn contains a Product 50 defined in the form a set of Product/Process Segments 60 generally arranged in a hierarchy.

All these entities are related to logical agents. Not all the agents are always active in the system. For instance, Physical Agents (PAs), related to physical entities, are active whilst the associated entity is part of the plant. Work Order Agents (WOAs), as exemplified by blocks 70 to 74 in Figure 6, are created and activated in response to a new work order arrived in the system.

Process and Product Segments Agents are activated by the Work Order Agents; these work out the list of operations to be performed for serving the Work Order and create the necessary Operation Agents (OAs) related to operations that are necessary to process the Work Order.

A major portion of a Multi-Agent System (MAS) activity is related to assigning operations requested by Work Orders on the physical entities available in the plant, taking into account scheduling constraints and criteria. This is the fundamental capability of the scheduler and it is performed by applying a "Work Order Scheduling Protocol".

However, other interaction protocols among agents exist in an Agent-based Detailed Production Scheduler or ADS, and provide useful capabilities to the product.

For example, a dedicated interaction protocol is applied by Work Order Agents in order to "browse" the plant structure and select the physical entity to contact for acquiring a given service. Other protocols can be used to rearrange slot allocation of an earlier computed schedule and optimize performance.

The Work Order Scheduling Protocol thus plays quite a significant role in the exemplary scheduling system described herein. The protocol specification and some examples of communications based on that protocol will therefore be given in the following.

The scheduler described herein will be assumed to be operating in real-time, with the Multi-Agent System always active.

While the agents operate autonomously and concurrently and the Multi-Agent System may be involved at each time instant in several decision steps for scheduling one or more work orders, the description of the Multi-Agent System activity can be given following the action steps for scheduling a single work order. This activity contains all the actions performed by the Multi-Agent System and provides a complete overview of the Multi-Agent System while applying the Work Order Scheduling Protocol.

Essentially, a Work Order Agent (WOA) is created in response to a new work order to be scheduled. A Work Order Agent contains all the data describing the work order (product type, quantity, due-date, lot number, etc.). The Work Order Agent activates the Product Segment Agents (ProdSA) and hence the Process Segment Agents (ProcSA) related to the Work Order product.

By accessing the necessary information from the Process Segment Agents, the Product Segment Agents become knowledgeable of the list of operations to be performed for producing the given product.

The Product Segment Agents create Operation Agents in a number equal to the number of the necessary operations. Each Work Order Agent knows the operation to be performed and the resources necessary for the operation. Moreover, the Work Order Agents are provided by the Product Segment Agents with the product segment constraints and dependencies as priority, parallel execution infeasibility etc.

Some process segments may in fact require resources defined at levels higher than the Unit level (e.g. Cell or Area); this information is preserved by the Product Segment Agents.

These agents are in charge of contacting the right physical entity by applying the negotiation protocol as described in the following.

According to the ISA 95 specification, Process Segments, and hence Product Segments are organized in a hierarchical structure. Therefore, a product segment can be composed of sub-segments; the agents representing the Product Segments reflect this structure. However, agents modelling Product Segments do not operate in hierarchical structure, but rather represent how the various segments are linked to each other.

Figure 7 schematically shows the creation and interaction between Work Order Agents or WOAs and Operation Agents or OAs (solid line) and possible interaction messages between WOAs (or OAs) and Resource Agents or RAs (dashed line).

The protocol described herein defines the fundamental interaction among agents for the agent-based detailed scheduler. The Work Order Scheduling Protocol is applied by each Work Order Agent for interacting with physical entity agents and assigning a processing resource and time slot for each operation that is part of the related work order.

The exemplary protocol described herein is designed for a flat product segment structure. This means that product segments are assumed containing a list of atomic operations. Product segments do not contain sub-segments.

The exemplary protocol described herein is composed by two main sections plus initialization and finishing sections.

The first section can activate new instances of the section itself, providing recursive actions; the second section of the protocol includes a set of steps executed iteratively.

The following protocol description provides details for each protocol section and for the agent behaviours that manage the conversation. The description is split up in the various sections of the protocol.

During the Initializing conversation, the Work Order Agents are in charge of acquiring resources for processing their own operations. The Work Order Agents are activated one at a time, in response to a new incoming order to the system. Otherwise, the Work Order Agents are activated in batch if a detailed schedule is computed on the basis of a rough production schedule or the scheduling process is activated intermittently.

Before starting a scheduling conversation, each Work Order Agent takes a set of decisions, including computing priorities for the Work Order, choosing dependency and checking criteria (backward or forward) and possibly selecting the physical entity to contact for sending the first message.

Applying the negotiation protocol, the Product Segments Agents select the physical entity to contact for starting the protocol according to the rules indicated in the following:
- i) the physical entity to contact is the lowest level entity able to perform all the activities listed in the related product segments;
- ii) if more than one entity at the same level are available, then the "parent" entity is selected.

These entity selection rules ensure that the Product Segment is executed on the "optimal" available resource and avoid spreading operations of the same segment among equivalent high-level entities (area, cell) when this is not strictly necessary.

As better detailed in a co-pending application filed concurrently by the same Applicant, the behaviour depicted above is customizable by means of scheduling rules, and specifically with a visual tool used to control plant operations by means of visual rules. Exemplary of such a tool is the visual tool designated Production Modeler (PM), included in the MES (Manufacturing Execution System) commercially available under the designation SIMATIC IT™.

When a Work Order Agent wants to start a "Work Order Scheduling" conversation, it applies the first section of the protocol. The first section described in detail in the following comprises two steps.

### First section: "Requesting Work Order Service".

### Step 1

Referring to Figure 8, in a step 80 a Work Order Agent sends a request_wo_service message to the Physical Entity Agent (PEA). The contacted Physical Entity Agent has been selected by the Work Order Agent according to the rules given above or indicated by a previous protocol section if the actual section is nested in a previous section.

A step 90 is devoted to verifying if the RA Resource Agent or RA has signaled a delegation. In the positive, in a step 100 the list of RA to contact for nested first section is the RAlist. In a step 110 for each RAᵢ in the RAlist the first section is called on the RAᵢ.

In the negative, in a step 130 the list of RAs to contact for each operation is OAmap. In a step 140 for each RAᵢ in the OAmap the second section is called.

In Figure 8, the Section 1 of the Work Order Scheduling Protocol is defined by means of Flow Diagram; it includes evaluation steps, sub-routine call steps and conditional statements.

A request_wo_service message declares the request for service; it contains the information about the required operations (Work Order Product Segment), the amount of workload and additional data that could be used by the agent behaviors (i.e. time constraints).

The Physical Entity Agent that receives the announce message can act according to the following four cases.

Case 1 - The Work Order cannot be processed by the resource or its "child" resources (plant-branches). This is due to unfeasibility in matching the necessary operations and resource capabilities. This case can arise in various scenarios: an error has occurred in setting the scheduling rules for establishing the resource to be contacted; unexpected plant configuration changes have modified the plant-branch production capabilities, etc.

Case 2 - All the operations requested by the Work Order can be processed by one or more plant-branches that are children of the contacted resource and the scheduling criterion aims at containing all the operations of the same work order in one branch only, if possible. For instance, by applying this criterion, if a Work Order requires two operations, 01 and 02, and there are two identical cells (Cell1 and Cell2) containing units able to perform 01 and 02, then the work order is entirely processed in either Cell1 or Cell2; taking apart 01 and 02 of the same work order is not allowed.

Case 3 - All the operations requested by the Work Order can be processed by one or more plant-branches that are children of the contacted resource and the scheduling criterion allows spreading the operations of a Work Order among different branches, even if it is not strictly necessary. In the example given above, by applying this criterion, a Work Order can be executed by processing 01 on a unit of Cell1 and 02 on a unit of Cell2.

Regardless of the plant configuration, the possibility exists of applying different criteria in activating the Work Order operations. The behaviour depicted above is customizable by means of Production Modeler (PM) rules in order to implement different scheduling criteria.

Case 4 - The operations requested by the Work Order can be processed by a set of child resources (including the actual resource), yet there is not any sub-branch able to process the whole Work Order operations set.

The Physical Entity Agent replies to the Work Order Agent with a response message; the contents of the response message differ as a function of the case considered, as shown in the following.
Case 1: the Physical Entity Agent informs the Work Order Agent about the unfeasibility of processing one or more operations of the Work Order.
Case 2: the Physical Entity Agent delegates the scheduling conversation to one or more child resources. It communicates to the Work Order Agent the list of Physical Entity Agents to contact.
Case 3 or Case 4: the Physical Entity Agent signals the Work Order Agent to activate agents related to its operations and informs it about the Physical Entity Agents that can perform the necessary operations. The message contains the list of Work Order operation and, for each operation, the list of possible resources that can process the related operation;
Ox : [Ra, Rb],
Oy : [Ra, Rc], etc.

The protocol structure may additionally vary according to the four cases.

Case 1 - Conversation abort. No further computation is possible. The Work Order Agent will escalate to other scheduler component.

Case 2 - The Work Order Agent activates a new first section for each Physical Entity Agent listed in the response message. Possibly, the Work Order Agent uses a dedicated behavior for managing each section instance by activating behavior instances in a number equal to the number of the Physical Entity Agents it has to deal with. This architecture allows easy implementation of the nested protocol sections/behaviors and provides tracking of the agent actions for free.

The next step of the section is executed after all the nested sections have been concluded, hence all the Work Order Agent behaviours have returned.

Case 3 and Case 4 - The Work Order Agent activates the second section of the protocol. The next first section step is executed after the second section has been completed.

### Step 2

When the first section is executing Step 2, the Work Order Agent has received a list of possible complete schedules for the related Work Order. The computed schedules are the result of either i) execution of nested first section conversations or ii) a second section conversation. Of course, the first section can be nested more than once; eventually, every first section returns to its caller by executing a case 1 or activating Section 2 in case 3 or case 4.

The Work Order Agent marks the received whole work order schedules with its own preferences. Then, it sends an evaluate_schedule message to the Physical Entity Agent. The evaluate_schedule message contains the schedule proposals and the related preference values.

Again, this behavior is customizable by means of Production Modeler (PM) scheduling rules.

The Physical Entity Agent selects a sub-set of possible schedules to save. In fact, this step of the protocol can be repeated if the conversation was delegated more than once, and the Physical Entity Agent can save more than one possible schedule. The final decision, i.e. selecting one schedule only, is expected to be taken by the first Physical Entity Agent that was contacted by the Work Order Agent. However, the scheduling conversation can return more than one possible schedules if the scheduling process is designed to provide user or other software systems with alternative schedules. The Physical Entity Agent replies to the Work Order Agent by providing a list of selected schedules.

This behavior is once more customizable by means of Production Modeler (PM) scheduling rules.

The Work Order Agent forwards this information to the Operation Agents related to its Work Order operations by sending a confirm_schedule message.

Each Operation Agent informs the Physical Entity Agents that made the slot proposals about the slot to confirm and the slots to be canceled. Each Operation Agent involved sends a confirm_slot message containing the list of slots to be saved.

The Physical Entity Agent acknowledges the slot confirmation/cancellation by a reply message.

The Operation Agent replies to the Work Order Agent by indicating that slot confirmation was concluded.

The next step in the protocol is the Finishing Conversation.

### Second section: "Scheduling Operations".

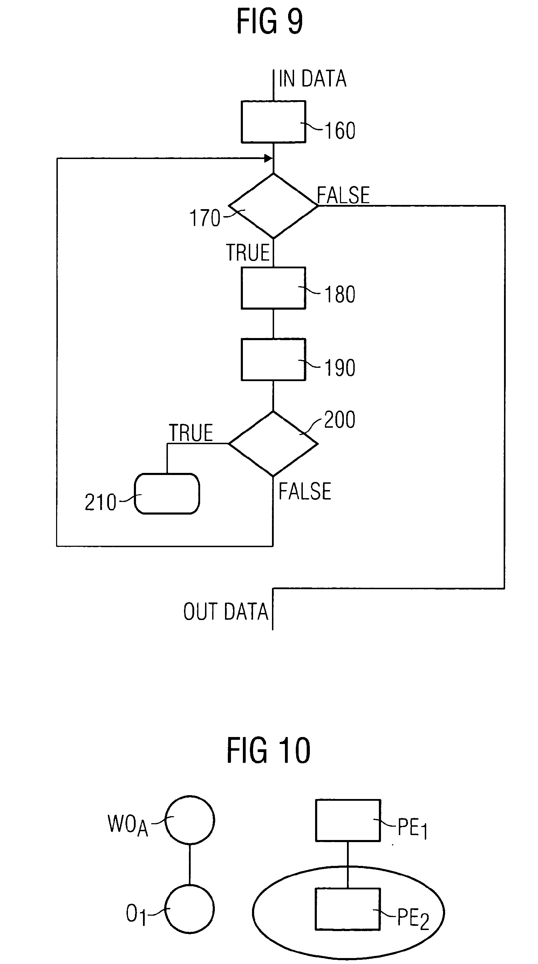

Referring to Figure 9, in a step 160 a Work Order Agent activates the Operation Agents (OAs) by sending an activate_operation message. The activate_operation message contains the list of Physical Entity Agents that can be contacted by the Operation Agent for acquiring service. In a step 170 a check is made as to whether operations exist to be scheduled. In the positive, the check operation dependencies are effected in a step 180. In a step 190 a release_operation message is sent to all those operations that can be scheduled and a reply is waited for.

In a step 200 a check is made as to whether any unfeasibilities have been raised. In the positive, in a step 210 an error handling message is sent, thus making a conversation abort possible. In the negative the process returns to the step 170.

In Figure 9, Section 2 of the Work Order Scheduling Protocol is presented by means of a Flow Diagram; it includes evaluation steps, sub-routine call steps and conditional statements.

The Work Order Agent has to activate its related Operation Agents and cause them to negotiate for acquiring the necessary resources.

The Work Order Agent has two options for activating the other agents; the former option implements backward scheduling, the latter is a forward scheduling approach.

Backward activation is suitable for strict due-date target criteria. The Work Order Agent activates the sub-tasks starting from the last operation (i.e. the one that has to be completed on the due-date) and proceeding according to the operation reverse order (i.e. in backward order). This arrangement permits gaps to be inserted for reliability of the schedule and for recovering from ready time infeasibility. Forward activation is more suitable for scheduling in highly congested time periods. When applying forward activation, the due-date target is not strongly considered; however there is no time wasted as the jobs are scheduled as soon as possible.

Agent activation is performed by the Work Order Agent according to the operations original order (forward). Forward activation can be further improved by optimizing the selection of time slots and trying to recover from tardy process completion.

Other policies for activating operations are however possible. Each Work Order Agent can implement its own strategies for activating the operations in order to best suit its objective.

A Work Order Agent can apply a scheduling protocol more than once; this happens when a scheduling attempt fails because of unfeasibility in assigning one or more operations to resources. For example, an attempt to satisfy a min-max waiting time for an operation can result in receiving no proposals from the Physical Entity Agents (this case is further detailed in the following).

In this case, the scheduling protocol aborts and the Work Order Agent will attempt again to acquire a schedule for its work order, possibly modifying preferred starting time (or ending time, if backward activation is applied) for the first (last) operations. The Work Order Agent can track the attempts of scheduling and detect any critical scheduling path; if these capabilities are implemented, the Work Order Agent can apply any sequence in releasing Operation Agents without breaching the protocol.

Once more, the behavior depicted above is customizable by means of Production Modeler (PM) scheduling rules.

Each Operation Agent announces itself to all the Physical Entity Agents that were listed in activate_operation message and hence can be contacted for acquiring service.

Operation Agents thus send announce messages and Physical Entity Agents reply to the Operation Agents with acknowledge messages. Then Operation Agents reply to the Work Order Agents with acknowledge messages.

This protocol phase leads all the Physical Entity Agents to become knowledgeable of the operations that will be released later. In fact, the Physical Entity Agents need to know the operations that will request schedule in order to optimize the way of resolving conflicts in accessing resources. Resolution of conflicts in accessing resources will be described in greater detail in the following.

Work Order Agents check dependencies and constraints of operations. Specifically, each Work Order Agent detects the operations that can be scheduled and sends a release_operation message to the related Operation Agent. The release_operation message contains information about release time, due date and deadline for the operation schedule.

Each Operation Agent that receives the release_operation message sends a request_slot message to all the Physical Entity Agents listed in the activate_operation message it has received. The request_slot message contains data necessary for allocating the best slot for the operation (release time, due date, preferred starting time, etc.).

Physical Entity Agents receive request_slot messages, and compute one or more slots for the operation. This computation can include several steps, such as sorting the received requests according to custom criteria, evaluating alternatives also considering operations announced, but not requesting a slot. The Physical Entity Agents reply to the Operation Agent with the list of proposed slots for service.

Whenever a Physical Entity Agent computes a slot for an operation, it may have to deal with and manage conflicts that can arise because of the requests for service emitted by other Work Order Agents. Actually, several scheduling protocol instances can run simultaneously; a Physical Entity Agent can manage more than one conversation at a time and hence they can receive slot requests from more than one operation agent. Each Physical Entity Agent can implement its own behavior for calculating time slots and serving requests. Thanks to the announce protocol phase, the Physical Entity Agent involved is aware of all the operations that are going to request a slot.

In order to improve performance, the Physical Entity Agent can wait until other Operation Agents have been released before replying to a request and computing slots on the basis of a consolidate view.

The slot selection behavior is another behavior that is customizable by means of Production Modeler (PM) scheduling rules.

The Operation Agent receives the proposed slots and marks them with a value indicating preferences. Then it replies to the Work Order Agent by forwarding the list of proposed slots for service with the preferences.

The previous step could in fact fail in computing a slot for operation process. This is due to possible unfeasibility in satisfying constraints as minimum and maximum waiting time.

In this case, the Operation Agent signals the occurrence of an error to the Work Order Agent, and the Work Order Agent aborts the scheduling conversation. Possibly, this will perform a new scheduling attempt with different parameters or will escalate error to another scheduler component.

The Work Order Agent evaluates partial schedules obtained by combining the received slots for service for each operation.

It marks each partial schedule with a value indicating preferences and requests the Physical Entity Agent to select a subset of possible partial schedules to save. It sends a evaluate_partial_schedule message to the Physical Entity Agents. The evaluate_partial_schedule message contains the list of partial schedules with preferences.

The one just described is still another behavior that is customizable by means of Production Modeler (PM) scheduling rules.

The Physical Entity Agent selects a sub-set of partial schedules to save and replies to the Work Order Agent communicating the selected slots.

The Work Order Agent communicates to the Operation Agents the list of schedules to be confirmed and hence the list of schedules to be canceled. The Work Order Agent sends a confirm_partial_schedule message to the Operation Agents The Operation Agents sends a confirm_slot message to the Physical Entity Agents from which they have received one or more proposal.

The Physical Entity Agent acknowledges the slot confirmation/cancellation by a reply message. The Operation Agent replies to the Work Order Agent informing that the slot confirmation has concluded.

The Work Order Agent can now compute new dependency constraints and release any other operations to be scheduled. The Work Order Agent can release one operation more than once, having regard to the number of possible partial schedule combinations saved by the Physical Entity Agents. For each operation to release and for each partial schedule combination, the Work Order Agent sends a release_operation message to the Operation Agent.

This protocol part is repeated until all operations are scheduled.

All the Operation Agents have then been released and have returned a slot confirmation acknowledgement; the second section protocol can thus return the computed schedules to its caller, i.e. a first section protocol instance.

At this protocol step the Work Order Agent has received one or more confirmed whole work order schedule. Finally, the Work Order Agent reports the obtained schedules to the scheduler. The conversation is finished.

Two specific examples of Work Order Scheduling Protocol instances will now be described in detail.

The former example is based on a simple plant structure and considers a Work Order composed of one operation only. This example aims at demonstrating in greater detail the first section of the protocol (the delegation mechanism applied when a request for service has to be propagated to sub-level physical entities). This phase is designed according to a recursive pattern, and providing a practical example is more immediate than providing a formal specification.

On the other hand, the latter example refers to a more articulated scenario with a multiple branch plant structure and a Work Order composed of many operations, with dependencies. The latter example includes all the possible actions of the protocol and shows a complete Work Order scheduling conversation in a consolidated view.

A simple Work Order scheduling protocol instance is described. The example is useful in clarifying the basic structure of the protocol. Both the first section and the second section of the protocol are applied in the example; more to the point, the first section is applied twice due to the particular plant structure that requires delegation of the Work Order scheduling process.

The plant considered in the examples will be assumed to be comprised of two physical entities organized in the hierarchy structure depicted in Figure 10: PE₁ is a container entity that contains PE₂.

The protocol is not dependent on the specific physical entity (Area, Cell, etc.), and, for the sake of simplicity of illustration, the plant model used in this example can be assumed to be comprised of a Cell (PE1) containing a Unit (PE2).

The Work Order structure (i.e. its related product segment) is depicted in Figure 10 as well. The order WO_{A} requires one operation only (O₁), and the operation O₁ can be processed by PE₂ only.

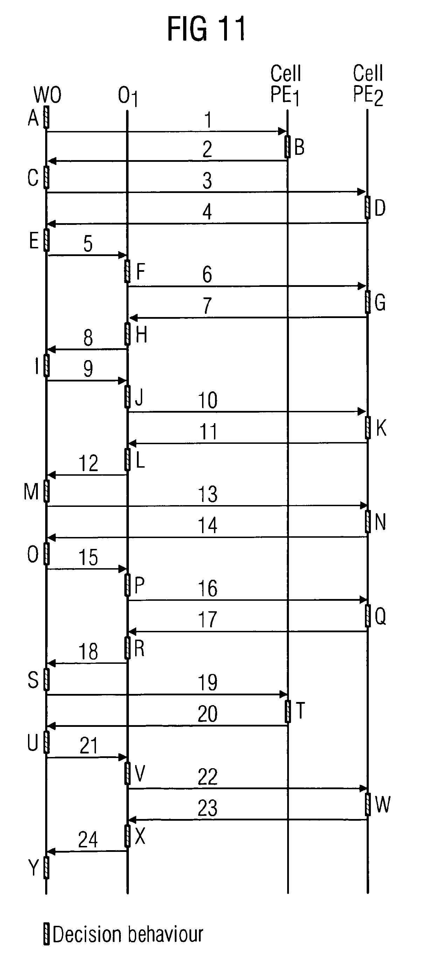

The numbers of the sections described in the following correspond to those reproduced in Figure 11.
1. WO_{A} decides to send a request for service; the WO requests service to PE1 by sending a request_wo_service message and specifying
   - product segment,
   - quantity,
   - due-date or release-date.
2. PE1 cross-checks the requested functions and its own function capability. The whole WO process can be performed in PE2 (Case 2) so that PE1 replies to the WO specifying the list of PEs to contact (PE2).
3. The WO contacts PE2 by sending a new request_ wo_service message and specifying
   - product segment,
   - quantity,
   - due-date or release-date.
4. PE2 recognizes it can process the operation requested by the WO (Case 4). PE2 replies to the WO specifying
   - that the operations can be activated,
   - the equipment to be contacted by each operation (PE2 for 01).
5. The WO activates its child operation agent and causes it to announce itself by sending a activate_operation message.
6. 01 sends a announce message to PE2.
7. PE2 replies to OA with an acknowledge message.
8. OA in turn replies to WOA with an acknowledge message.
9. The WO determines what operations have to be activated according to the dependency scheme and activation policy. In the case considered, only 01 can be activated. WOA signals 01 by sending a release_operation and causes it to contact PE2. The WO communicates to 01 the following data:
   - PE to contact,
   - due-date or release-date.
10. 01 requests service from PE2 by specifying:
   - their functions,
   - their due-date or release-date.
11. PE2 computes one or more service proposals and replies to PE2 by specifying the offered time-slot, cost and setups.
12. 01 marks the received service proposals with "preferences" and forwards the offers to the WO by specifying:
   - offer schedule data,
   - preferences.
13. The WO analyzes possible combinations of the received proposals and marks them with "preferences". WO communicates the possible temporary partial schedules to the PE2 by sending evaluate_schedule message specifying:
   - temporary schedule data
   - preferences
14. PE2 selects a sub-set of received service proposal to save and communicates to the WO the sub-set of proposal to be saved.
15. The WO communicates to 01 the selected schedule by sending a confirm_schedule message, by specifying the list of proposals to be saved.
16. 01 signals PE2 to save the selected proposal and discard the others sending a confirm_slot message containing the list of proposals to be saved.
17. PE2 acknowledges 01 with the saved proposals (this may include a possible error report, which is not detailed in this protocol description).
18. 01 acknowledges the WO with the saved proposals.
19. The WO analyzes the received proposals (only one in this example) and marks them with "preferences". The WO communicates the possible temporary partial schedules to the PE1 (evaluate_schedule message) by specifying:
   - temporary schedule data,
   - preferences.
20. PE1 selects one of the received service proposal to save and communicate to the WO the proposal to be saved.
21. The WO communicates to its operation (01) the selected schedule, by specifying the schedule (confirm_schedule message).
22. 01 signals PE2 the selected schedule to be confirmed specifying (confirm_slot message) the schedule to be confirmed.
23. PE2 acknowledges 01 with the confirmed schedule (this may include a possible error report, not detailed in this description).
24. 01 acknowledges the WO with the confirmed schedule.

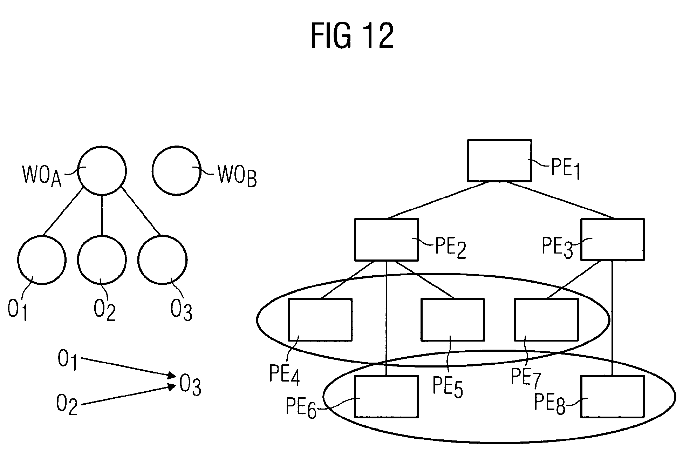

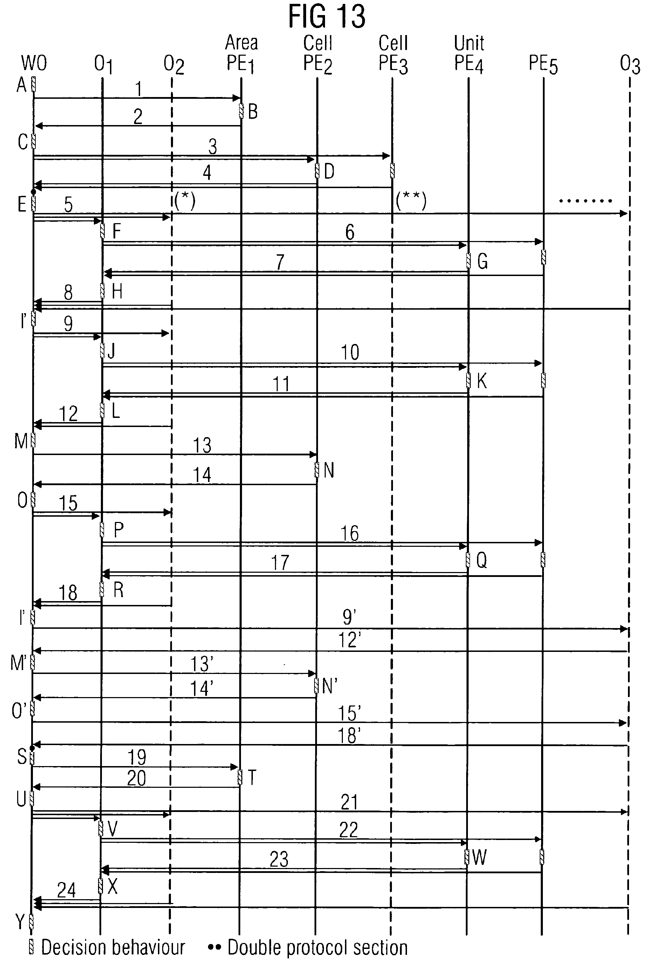

A complete negotiation protocol among a Work Order agent and physical entity agents will now be described in connection with Figures 12 and 13.

The protocol description is given with reference to a scheduling problem that includes all the possible options for the generic work order and plant configurations.

The example considers Work Orders of the type WO_{A} depicted in Figure 12.

The protocol description is detailed for one Work Order instance only. However, other Work Order instances can apply their own Work Order scheduling conversation simultaneously. Work Orders of other types (e.g. WO_{B}) could be active as well.

As indicated, the plant considered is assumed to be comprised of a set of physical entities organized in a tree-like hierarchy structure including branches. This plant structure is compliant with the ISA 95 standard, while the types of physical entities in the problem instance are not specified in order to emphasize the general nature of the protocol description. While every physical entity agent involved in the negotiation protocol plays essentially the same role (physical entity), the physical entity agents behave differently, according to the level of the related entity in the hierarchy structure. Those agents (PEs) that are container of other PEs (Area, Cell) delegate the negotiation process to sub-level agents; the PEs in the lowest level have to compute and offer a service for the operation.

In the problem instance depicted in Figure 12, WO_{A} requires three operations: O₁, O₂ and O₃. O1 and O2 require the function type A, 03 requires the function B. O₃ has to be performed after O₁ and O₂ completion.

While the plant description is given in terms of general physical entities, an exemplary specific denotation for each entity may be beneficial in appreciating the problem instance. The plant is composed of a PE₁ (Area) containing two PEs, PE₂ and PE₃ (Cells). PE₂ in turn contains three PEs: PE₄, PE₅ and PE₆ (Units), while PE₃ contains two PEs : PE₇, PE₅ and PE₈ (Units) :

The Units PE₄, PE₅ and PE₇ are equivalent and can perform function type A. PE₆ and PE₈ are equivalent and can perform function type B. Hence, the two cells PE₂ and PE₃ are equivalent as they have the same production capability. Consequently, WO_{A} can be processed by either PE₂ or PE₃.
1. The WO decides to send a request for service by sending to PE1 a request_wo_service message and specifying:
   - product segment,
   - quantity,
   - due-date or release-date.
2. PE1 cross-checks the requested functions and its own function capability. The whole WO process can be performed in either PE2 or PE3 (Case 2) so PE1 replies to WO by specifying the list of PEs to contact (PE2, PE3).
3. The WO contacts PE2 and PE3 sending two request_wo_service messages and specifying:
   - product segment,
   - quantity,
   - due-date or release-date.
4. Both PE2 and PE3 recognize the operations requested by the WO have to be processed by sub-level PEs (Case 4). PE2 and PE3 reply to the WO by specifying:
   - that the operations can be activated,
   - the equipments to be contacted by each operation (PE2: PE4 and PE5 for both O1 and O2; PE3: PE7 for both O1 and O2). From this point onwards, the WO activates two similar conversations, with PE2 (and its sub-level equipments) and PE3 (and its sub-level equipments). Only the conversation with PE2 (and its sub-level equipment) is shown in the protocol diagram.
5. The WO activates its child operation agents and causes them to announce themselves by sending a activate_operation message.
6. Each OA sends a announce message to the PEA it will contact for acquiring service.
7. The PEA involved replies to the OA with an acknowledge message.
8. OA in turn replies to the WOA with an acknowledge message.
9. The WO determines what operations have to be activated according to the dependency scheme and activation policy. It signals the operations to be activated (O1 and O2) by sending a release_operation and causes them to contact the right PE. The WO communicates to O1 and O2 the following data:
   - PEs to contact,
   - due-date or release-date.
10. Both O1 and O2 request service to PE4 and PE5 by specifying:
   - their functions,
   - their due-date or release-date.
11. PE4 and PE5 compute one or more service proposals and reply to PE2 by specifying the offered time-slot, cost and setups.
12. Both O1 and O2 mark the received service proposals with "preferences" and forward the offers to the WO by specifying:
   - offer schedule data,
   - preferences.
13. The WO analyzes possible combinations of the received proposals and marks them with "preferences". WO communicates the possible temporary partial schedules to the PE2 by sending evaluate_schedule message by specifying:
   - temporary schedule data,
   - preferences.
14. PE2 selects a sub-set of received service proposal to save and communicate to the WO the subset of proposals to be saved.
15. The WO communicates to its operations (O1 and O2) the selected schedule by sending a confirm_schedule message, by specifying the list of proposals to be saved.
16. O1 and O2 signal PE4 and PE5 to save the selected proposals and discard the others sending a confirm_slot message containing the list of proposals to be saved.
17. PE4 and PE5 acknowledge O1 and O2 with the saved proposals (this may include a possible error report, not detailed in this description).
18. O1 and O2 acknowledge the WO with the saved proposals. The steps I', M', N', and O' and the messages 9', 12', 13', 14', 15', and 18' are essentially similar to the protocol sections from step I to step O and messages from 9 to 18 described in the foregoing. This protocol section computes the schedule slot for the operation O3. The operation O3 is activated according to the release date and due date of the previous operations. The operation O3 is provided with information about the previous operations reserved schedule. If more than one slot for either O1 or O2 have been reserved, then the WO activates O3 more than one in order to evaluate all the alternatives.
   At this point, the WO concludes two similar conversations, with PE2 and PE3, respectively.
19. The WO analyzes possible combinations of the received proposals and marks them with "preferences". WO communicates the possible temporary partial schedules to the PE1 (evaluate_schedule message) by specifying:
   - temporary schedule data,
   - preferences.
20. PE1 selects one of the received service proposal to save and communicate to the WO the proposal to be saved.
21. The WO communicates to its operations (O1, O2 and O3) the selected schedule, by specifying the schedule (confirm_schedule message).
22. O1, O2 and O3 communicate to the Physical Entities the selected schedule to be confirmed by specifying (confirm_slot message) the schedule to be confirmed.
23. PEs acknowledge O1, O2 and O3 with the confirmed schedule (this may include a possible error report, not detailed in this description).
24. O1, O2 and O3 acknowledge the WO with the confirmed schedule.

Due to the specific behavior of the protocol and the architecture described in the foregoing, the solution described herein leads i.a. to the following advantages in using a scheduling process in manufacturing environment:
- portability: the arrangement described herein can be easily applied to any production environment compliant to ISA 95 specifications without requiring specific developments to adapt such a system to manufacturing plants;
- distributed scheduling decisions: the scheduling criteria (associated with entities in a manufacturing system) reflect the distributed structure of ISA 95 and the associated agents; specifically the protocol described herein allows distributing the scheduling decisions throughout the manufacturing plant;
- local definition of scheduling constraints: technological constraints are taken into account locally by means of the single agent associated to the manufacturing equipment and by agents associated to work orders and operations; and
- flexibility: any changes in the ISA 95 model of production plant and products is directly catered for by the scheduling system, by effecting corresponding changes in the agent-based architecture; flexibility is a direct consequence of the distribution of the scheduling decisions and of the local definition of the scheduling constraints above mentioned.

Without prejudice to the underlying principles of the invention, the details and the embodiments may vary, also appreciably, with reference to what has been described by way of example only, without departing from the scope of the invention as defined by the annexed claims.

## Claims

1. An architecture of an agent-based scheduling system for scheduling processing of incoming work orders (40, WOA) in a plant by means of operations performed by physical entities (20) available in the plant, wherein the agents in said architecture comprise a tree-like hierarchy (S, A, C, U) including branches, the system being configured for applying a work order scheduling protocol to rule the interactions between said agents (10) in assigning operations requested by said incoming work orders to said physical entities (20), the protocol including:
- a first main section, wherein the protocol identifies in said hierarchy a plurality of branches, each branch thus identified including physical entities adapted to process a given Work Order, and
- a second main section, wherein processing of said given Work Order is scheduled for each one of said identified branches of physical entities, whereby one of said scheduled branches is adapted to be selected for processing said given Work Order.

2. The architecture of Claim 1, **characterized in that** it includes agents (10) related to physical entities of an ISA 95 standard plant definition.

3. The architecture of either of Claims 1 or 2, **characterized in that** it includes agents selected out of the group consisting of:
- Physical Agents (PAs), representative of said physical entities in said plant,
- Work Order Agents (WOAs) adapted to be created and activated in response to said incoming work orders in the system,
- Process and Product Segments Agents adapted to be activated by said Work Order Agents to work out lists of operations to be performed for serving said incoming work orders, and
- Operation Agents (OAs) representative of operations necessary to process said incoming work orders.

4. The architecture of Claim 3, **characterized in that** each said Work Order Agent (WOA) is configured for applying said work order scheduling protocol for interacting with said Physical Agents (PAs) and assigning a processing resource and time slot for each operation that is part of a related work order.

5. The architecture of either of Claims 3 or 4, **characterized in that** the architecture is configured for creating a Work Order Agent (WOA) in response to a new work order to be scheduled.

6. The architecture of any of Claims 3 to 5, **characterized in that** said Work Order Agents (WOAs) contain all the data describing a given work order and are configured for activating Product and Process Segment Agents (ProdSA, ProcSA) related to a given Work Order product.

7. The architecture of Claim 6, **characterized in that** said Product Segment Agents (ProdSA) are configured for accessing said Process Segment Agents (ProcSA) to become knowledgeable of the operations to be performed for producing a given product.

8. The architecture of either of Claims 6 or 7, **characterized in that**, wherein each said Work Order Agent (WOA) is configured for detaining information as to at least one operation to be performed and the resources necessary for said operation, said Product Segment Agents (ProdSA) are configured for providing said Work Order Agents (WOAs) with product segment constraints and dependencies.

9. The architecture of any of Claims 6 to 8, **characterized in that** said Product Segment Agents (ProdSA) are configured for contacting said physical entities in the system by applying said protocol.

10. The architecture of any of the previous claims, **characterized in that** it includes at least one Work Order Agent (WOA) configured for applying a dedicated interaction protocol to browse the plant structure and select the physical entity to contact for acquiring a given service.

11. The architecture of any of the previous claims, **characterized in that** it includes at least one rearranging agent configured for applying a protocol to rearrange slot allocation of an earlier computed schedule.

12. A work order scheduling protocol for an agent-based scheduling system for scheduling processing of incoming work orders (40, WOA) in a plant by means of operations performed by physical entities (20) available in the plant, wherein the agents in said agent-based scheduling system comprise a tree-like hierarchy (S, A, C, U) including branches, said protocol ruling the interactions between said agents (10) in assigning operations requested by said incoming work orders to said physical entities (20), said protocol including:
- a first main section, wherein the protocol identifies in said hierarchy a plurality of branches, each branch thus identified including physical entities adapted to process a given Work Order, and
- a second main section, wherein processing of said given Work Order is scheduled for each one of said identified branches of physical entities, whereby one of said scheduled branches is adapted to be selected for processing said given Work Order.

13. The protocol of Claim 12, **characterized in that** said protocol involves agents of said system acting as Product Segments Agents (ProdSA) to select a physical entity to contact for starting said negotiation protocol.

14. The protocol of Claim 13, **characterized in** said protocol is based on the following rules:
- i) the physical entity to contact is the lowest level entity able to perform all the activities listed in the related product segments;
- ii) if more than one entity at the same level are available, then the parent entity is selected.

15. The protocol of any of Claims 12 to 14, **characterized in** said protocol is based on scheduling rules customizable as visual rules (PM).

16. The protocol of any of Claims 12 to 15, **characterized in that** it includes sections selected out of the group consisting of:
- an initialization section,
- said first main section (80 to 120) requesting work order service by activating new instances of the section itself,
- said second main section (160 to 210) including a set of scheduling operations executed iteratively, and
- a finishing section.

17. The protocol of Claim 16, **characterized in that** said initialization section is in the form of a conversation wherein Work Order Agents acquire resources for processing their own operations.

18. The protocol of Claim 17, **characterized in that** during said initialization section said Work Order Agents are activated one at a time, in response new incoming orders to the system.

19. The protocol of Claim 17, **characterized in that** during said initialization section said Work Order Agents are activated in batch.

20. The protocol of Claim 16, **characterized in that** it includes a work order scheduling conversation by agents acting as Work Order Agents (WOAs) applying said first main section of the protocol.

21. The protocol of Claim 20, **characterized in that** before said scheduling conversation, said Work Order Agents take a set of decisions selected out of computing priorities for the work order, choosing dependency and checking criteria, and selecting a first physical entity to contact for implementing said negotiation protocol.

22. The protocol of either of Claims 16 or 20, **characterized in that** said first main section involves a first step wherein a Work Order Agent sends (80) to a Physical Entity Agent (PEA) a request message including information about required operations, and the Physical Entity Agent (PEA) that receives said request message is configured for acting by indicating any of:
- i) the work order being unable to be processed by the respective resource, directly or via any of its child resources;
- ii) all the operations requested by said work order being able to be processed by any of said child resources, thus allowing a scheduling criterion aiming at containing all the operations of the same work order in one branch only;
- iii) all the operations requested by said work order being able to be processed by a set of said child resources, thus allowing a scheduling criterion spreading said operations of said work order over different branches in said system; and
- iv) the operations requested by said work order being able to be processed by a set including said respective resource and its child resources, while no sub-branch exists in said system able to process the whole set of the operations requested by said work order.

23. The protocol of Claim 22, **characterized in that** said Physical Entity Agent (PEA) that receives said message is configured for replying to said Work Order Agent with a response message, including an indication of:
- in case i) above, the unfeasibility of processing one or more operations of said work order under case;
- in case ii) above, the scheduling conversation being delegated to one or more child resources, along with a list of Physical Entity Agents (PEAs) to contact; and
- in cases iii) or iv) above, the Work Order Agent having to activate agents related to its operations and the Physical Entity Agents able to perform the necessary operations.

24. The protocol of Claim 23, **characterized in that** said Physical Entity Agent (PEA) that receives said message is configured for replying to said Work Order Agent with a response message, including, in said cases iii) or iv), a list of Work Order operations and, for each operation, the list of possible resources able to process the related operation (Ox : [Ra, Rb], Oy : [Ra, Rc]).

25. The protocol of either of Claims 23 or 24, **characterized by** a protocol structure with said cases i) to iv) above and including:
- for case i), a conversation abort option, whereby said Work Order Agent escalates to other system components;
- for case ii), an option whereby said Work Order Agent (WOA) activates a new first main section for each Physical Entity Agent (PEA) listed in said response message and, possibly, said Work Order Agent (WOA) uses a dedicated behavior for managing each section instance by activating behavior instances in a number equal to the number of the Physical Entity Agents (PEAs) it has to deal with; and
- for cases iii) and iv), an option whereby said Work Order Agent activates said second main section of the protocol.

26. The protocol of Claim 20, **characterized in that** said first main section involves a second step including operations selected out of the sequence wherein:
- having received a list of possible complete schedules for a related Work Order, said Work Order Agent (WOA) marks the received whole work order schedules with its own preferences and it sends to a Physical Entity Agent (PEA) a message containing schedule proposals and related preference values;
- said Physical Entity Agent (PEA) selects a sub-set of possible schedules to save and replies to said Work Order Agent (WOA) by providing a list of selected schedules in the form of proposed slots;
- said Work Order Agent (WOA) forwards this list to a set of Operation Agents (Oas) related to its Work Order operations by sending a confirm message;
- each said Operation Agent (OA) informs the Physical Entity Agent (PEA) that made the slot proposals about the slot to confirm and the slots to be canceled by sending a confirmation message containing the list of slots to be saved;
- said Physical Entity Agent (PEA) acknowledges said slot confirmation/cancellation by a reply message; and
- said Operation Agent (OA) replies to the Work Order Agent (WOA) by indicating that slot confirmation was concluded.

27. The protocol of Claim 16, **characterized in that** said second main section includes said Work Order Agent activating a related Operation Agent (OA) by sending an activation message containing a list of Physical Entity Agents (PEAs) that can be contacted by said related Operation Agent (OA) for acquiring service.

28. The protocol of Claim 27, **characterized in that** said Work Order Agent (WOA) is configured for activating said Operation Agents (OAs) via backward scheduling, by activating sub-tasks starting from the last operation and proceeding according to the operation reverse order.

29. The protocol of Claim 27, **characterized in that** said Work Order Agent (WOA) is configured for activating said Operation Agents (OAs) via forward scheduling, by activating said Operation Agents (OAs) according to the original order of the operations.

30. The protocol of Claim 20, **characterized in that** said Work Order Agents (WOAs) are configured for applying a scheduling protocol more than once when a scheduling attempt fails because of unfeasibility in assigning one or more operations to resources.

31. The protocol of Claim 30, **characterized in that** said Work Order Agents (WOAs) are configured for attempting, when a scheduling attempt fails, to acquire a new schedule for their work order, by modifying preferred starting or ending time, for the the first and the last operation, respectively.

32. The protocol of either of Claims 30 or 31, **characterized in that** said Work Order Agents (WOAs) are configured for tracking the attempts of scheduling and detect any critical scheduling path.

33. The protocol of Claim 27, **characterized in that** said second main section includes the operations of:
- said Operation Agents (OAs) sending announcing messages to announce themselves to the Physical Entity Agents (PEAs) able to be contacted for acquiring service;
- said Physical Entity Agents (PEAs) replying to said Operation Agents (OAs) with acknowledge messages; and
- said Operation Agents (OAs) replying to said Work Order Agents (WOAs) with acknowledge messages, whereby all said Physical Entity Agents (PEAs) become knowledgeable of the operations that will be released later.

34. The protocol of Claim 27, **characterized in that** it includes the operations of:
- said Work Order Agents (WOAs) checking dependencies and constraints of operations by detecting operations able to be scheduled and sending release messages to the related Operation Agents (OAs), said release messages containing information about release time, due date and deadline for the operation schedule;
- each Operation Agent (OA) receiving one said release message sending a request message to the Physical Entity Agents (POAs) listed in the activation message it has received, said request message containing data for allocating a best slot for the operation;
- said Physical Entity Agents (PEAs) receiving said request messages and determining one or more slots for the operation; and
- said Physical Entity Agents (PEAs) replying to the Operation Agent with the list of proposed slots for service.

35. The protocol of Claim 34, **characterized in that** it includes the operations of said Physical Entity Agents (PEAs) replying to the Operation Agent with said list of proposed slots for service said list being marked with values indicating preferences.

36. The protocol of either of Claims 34 or 35, **characterized in that** said Physical Entity Agents (PEAs) are configured for dealing with and managing possible conflicts arising out of requests for service emitted by other Work Order Agents (WOAs) when determining one or more slots for an operation.

37. The protocol of any of Claims 34 to 36, **characterized in that** said Operation Agents (OAs) are configured for signaling the occurrence of scheduling errors to said Work Order Agents (WOAs), and wherein said Work Order Agents (WOAs) are configured for performing a new scheduling attempt with different parameters or escalating the error to another scheduler component.

38. The protocol of any of Claims 34 to 37, **characterized in that**:
- said Work Order Agents (WOAs) are configured for evaluating partial schedules obtained by combining the received slots for service for each operation, while marking each partial schedule with a value indicating preferences and then requesting said Physical Entity Agents (PEAs) to select a subset of possible partial schedules to save;
- said Physical Entity Agents (PEAs) are configured for selecting a sub-set of partial schedules to save and replying to said Work Order Agents (WOAs) by communicating the selected slots;
- said Work Order Agents (WOAs) are configured for communicating to said Operation Agents (OAs) a list of schedules to be confirmed and to be canceled; and
- said Operation Agents (OAs) are configured for sending a slot confirm message to the Physical Entity Agents (PEAs) from which they have received one or more proposals.

39. The protocol of Claim 34, **characterized in that** said Operation Agents (OAs) are configured for inidcating to said Work Order Agents (WOAs) by indicating that slot confirmation has been concluded.

40. The protocol of Claim 39, **characterized in that** said Work Order Agents (WOAs) are configured for computing new dependency constraints and releasing any other operations to be scheduled once said slot confirmation has been concluded.

41. The protocol of Claim 38, **characterized in that** said Work Order Agents (WOAs) are configured for releasing one operation more than once, having regard to the number of possible partial schedule combinations saved by said Physical Entity Agents (PEAs).

42. A computer program product, directly loadable in the memory of at least one computer and including software code portions for implementing the architecture of any of claims 1 to 11 when the product is run on a computer.

43. A computer program product, directly loadable in the memory of at least one computer and including software code portions for implementing the protocol of any of claims 12 to 41 when the product is run on a computer.
